# EUROPÄISCHE PATENTSCHRIFT

(11) **EP 1 577 084 B1**
(45) Veröffentlichungstag und Bekanntmachung des Hinweises auf die Patenterteilung: **12.08.2009**
(21) Anmeldenummer: 05005808.0
(22) Anmeldetag: 17.03.2005
(51) Int. Cl.: B32B 27/30, C08L 33/24, B32B 27/36, H05B 3/84, H05B 3/86, B29C 45/16, B60J 1/00, B64C 1/14

(54) **Kunststoff-Verbundscheibe für die Fahrzeugverscheibung**
Laminated plastic glazing for vehicles
Vitrage feuilleté en matière plastique pour véhicules

(30) Priorität: 19.03.2004 DE 102004014023
(43) Veröffentlichungstag der Anmeldung: 21.09.2005
(73) Patentinhaber: KRD Coatings GmbH, 21502 Geesthacht (DE)
(72) Erfinder: Ramlow, Anne, Dr., 20257 Hamburg (DE); Prinz, Raimund, 21653 Jork (DE)
(74) Vertreter: Emmel, Thomas

(56) Entgegenhaltungen:
- DE-A1- 2 728 387
- DE-A1- 10 147 537
- DE-A1- 10 151 281
- DE-A1- 19 717 740
- US-A- 4 309 319
- US-A- 4 396 644
- US-A- 4 594 290
- US-A- 5 360 659
- US-A- 5 747 159
- US-A1- 2002 110 693
- US-B1- 6 620 509
- PATENT ABSTRACTS OF JAPAN Bd. 2003, Nr. 11, 5. November 2003 (2003-11-05) & JP 2003 191399 A (TAKIRON CO LTD), 8. Juli 2003 (2003-07-08)
- PATENT ABSTRACTS OF JAPAN Bd. 1996, Nr. 04, 30. April 1996 (1996-04-30) & JP 07 323504 A (TAKIRON CO LTD), 12. Dezember 1995 (1995-12-12)
- PATENT ABSTRACTS OF JAPAN Bd. 1995, Nr. 02, 31. März 1995 (1995-03-31) & JP 06 316045 A (MITSUBISHI GAS CHEM CO INC; others: 01), 15. November 1994 (1994-11-15)
- PATENT ABSTRACTS OF JAPAN Bd. 017, Nr. 233 (M-1407), 12. Mai 1993 (1993-05-12) & JP 04 361034 A (TSUTSUNAKA PLAST IND CO LTD), 14. Dezember 1992 (1992-12-14)
- PATENT ABSTRACTS OF JAPAN Bd. 017, Nr. 191 (M-1396), 14. April 1993 (1993-04-14) & JP 04 339646 A (TSUTSUNAKA PLAST IND CO LTD), 26. November 1992 (1992-11-26)
- PATENT ABSTRACTS OF JAPAN Bd. 017, Nr. 117 (M-1378), 11. März 1993 (1993-03-11) & JP 04 301448 A (TSUTSUNAKA PLAST IND CO LTD), 26. Oktober 1992 (1992-10-26)
- PATENT ABSTRACTS OF JAPAN Bd. 1995, Nr. 08, 29. September 1995 (1995-09-29) & JP 07 137210 A (MITSUBISHI RAYON CO LTD), 30. Mai 1995 (1995-05-30)
- PATENT ABSTRACTS OF JAPAN Bd. 2003, Nr. 04, 2. April 2003 (2003-04-02) & JP 2002 370324 A (MITSUBISHI GAS CHEM CO INC), 24. Dezember 2002 (2002-12-24)
- PATENT ABSTRACTS OF JAPAN Bd. 2000, Nr. 02, 29. Februar 2000 (2000-02-29) & JP 11 320768 A (OTSUKA CHEM CO LTD), 24. November 1999 (1999-11-24)
- PATENT ABSTRACTS OF JAPAN Bd. 1999, Nr. 08, 30. Juni 1999 (1999-06-30) & JP 11 058654 A (MITSUBISHI GAS CHEM CO INC), 2. März 1999 (1999-03-02)
- PATENT ABSTRACTS OF JAPAN Bd. 2003, Nr. 07, 3. Juli 2003 (2003-07-03) & JP 2003 062952 A (MITSUBISHI GAS CHEM CO INC), 5. März 2003 (2003-03-05)
- PATENT ABSTRACTS OF JAPAN Bd. 1998, Nr. 01, 30. Januar 1998 (1998-01-30) & JP 09 239936 A (TAKIRON CO LTD), 16. September 1997 (1997-09-16)

## Beschreibung

Die vorliegende Erfindung betrifft eine Kunststoff-Verbundscheibe für die Fahrzeugverscheibung gemäß dem Oberbegriff des Anspruchs 1.

Kunststoffscheiben weisen im Vergleich zu Silikatglasscheiben eine Reihe von Vorteilen für die Fahrzeugverscheibung auf. Sie bilden bei mechanischer Zerstörung keine verletzungsträchtigen Splitter, haben ein geringeres Gewicht, eine geringere thermische Leitfähigkeit und eine bessere Formbarkeit als Silikatglas, und lassen sich überdies durch gezielte Modifikation oder Dotierung mit speziellen Eigenschaften versehen.

Um die Vorteile verschiedener Kunststoffe in einer Scheibe zu vereinigen, können Kunststoffscheiben auch aus mehreren aufeinandergelegten Einzelscheiben aufgebaut sein. Solche Scheiben sind als Kunststoff-Verbundglasscheiben bekannt. Überdies bietet diese Bauweise die Möglichkeit, zwischen den Einzel- , scheiben weitere Schichten mit weiteren Funktionalitäten einzubringen.

Aus der EP 0007857 ist eine Kunststoff-Verbundglasscheibe bekannt, die z.B. aus einer Acrylatscheibe und einer dünnen Beschichtung aus wärmestabilisiertem Polyurethan besteht. Letzteres weist selbstheilende Eigenschaften auf und eignet sich damit zur Veredelung der Oberfläche der Kunststoff-Verbundglasscheibe. Zwischen beiden Schichten befindet sich eine Schicht aus thermoplastischem Polyurethan, in die elektrisch leitende Drähte eingebettet sind, die z.B. als Scheibenbeheizung fungieren können.

Ein Kunststoff, der sich aufgrund seiner Eigenschaften für die Fahrzeugverscheibung anbietet, ist Polycarbonat (PC). Polycarbonat ist ein klarsichtiger Werkstoff mit extrem hoher Schlagfestigkeit, rückstellenden Eigenschaften nach mechanischen Einwirkungen, hoher Temperaturbeständigkeit und hoher Transparenz. Er eignet sich daher sehr gut für die Verscheibung von Kraftfahrzeugen insbesondere im sicherheitsrelevanten Bereich, z.B. in Polizeifahrzeugen. Allerdings weist PC eine schlechte Witterungsbeständigkeit auf und wird gerade bei dauerhafter UV-Einstrahlung farbstichig und spröde.

PC läßt sich durch Aufbringung eines UV-Schutzlacks vor der lichtbedingten Alterung schützen. Solche UV-Schutzlacke weisen jedoch hohe Konzentrationen von UV-Schutzadditiven auf und sind daher farbstichig. Überdies ist die UV-Schutzwirkung aufgrund der geringen Schichtdicke des aufgetragenen Lacks nicht befriedigend. Zudem altert der Lack unter UV-Einwirkung und bildet dabei Mikrorisse.

Ein weiterer Kunststoff mit für die Fahrzeugverscheibung geeigneten Eigenschaften ist das Acrylat Polymethylmethacrylat (PMMA), ein kratzfester und klarsichtiger Werkstoff. Er besitzt eine geringere Zähigkeit als PC und ist deshalb schlag- und spannungsrissempfindlich. Er weist jedoch eine weitaus höhere Witterungsbeständigkeit auf, und ist insbesondere unempfindlich gegen UV-Bestrahlung. Ähnliche Vorteile wie für PMMA gelten für andere Acrylate.

PMMA ist zwar transparent für UV-Licht, läßt sich jedoch gut mit farblosen UV-Schutzadditiven wie z.B. Benzophenon oder Benzotriazol dotieren. Aufgrund der im Vergleich zu einem UV-Schutzlack weitaus höheren Schichtdicke ist dabei die UV-Schutzwirkung weitaus besser.

Es hat in der Vergangenheit Versuche gegeben, Co-Extrudate oder Co-Laminate aus Acrylat und Polycarbonat herzustellen, um die Vorteile beider Werkstoffe zu vereinigen. Die dabei hergestellten Bauteile besaßen jedoch nur eine geringe Lebensdauer auf, da PMMA und PC unterschiedliche thermische Dehnungskoeffizienten aufweisen (PMMA: 8 x 10⁻⁵ K⁻¹; PC: 7 x 10⁻⁵ K⁻¹), und aufgrund der unterschiedlichen Dehnungseigenschaften der beiden Werkstoffe Spannungen in den Bauteilen auftraten, die z.B. zu einer Delaminierung oder zur Bildung von Rissen in den Bauteilen führten.

Aus der DE 27 28 387 ist eine Verscheibung für ein Flugzeug bekannt, die eine äußere Scheibe aus PMMA, eine Zwischenschicht aus Polyesterpolyurethan und eine Innenscheibe aus Polycarbonat aufweist.

Aus der US 5,360,659 ist eine mehrschichtige Infrarotschutzfolie bekannt, die z. B. Polycarbonat als erstes und PMMA als zweites Polymer-Material aufweisen kann. Die bekannte Schutzfolie kann z. B. an Glasscheiben oder transparente Kunststoffe laminiert werden, um einen IR-Schutz zu erreichen.

Aufgabe der vorliegenden Erfindung ist es, eine Kunststoffscheibe z.B. für die Fahrzeugverscheibung zur Verfügung zu stellen, die eine hohe Witterungsbeständigkeit, eine hohe Schlagfestigkeit, eine hohe Lebensdauer und einen effektiven Schutz vor IR-Strahlung aufweist.

Dies Aufgabe wird mit den Merkmalen des vorliegenden Anspruchs 1 gelöst. Demnach ist eine Kunststoff-Verbundscheibe für die Fahrzeugverscheibung vorgesehen, die eine Innen- und eine Außenseite aufweist. Die Verbundscheibe ist dadurch gekennzeichnet, dass sie eine Innenscheibe aus einem Polycarbonat-Kunststoff (Polycarbonat-Scheibe), eine Außenscheibe aus einem Acrylat-Kunststoff (Acrylat-Scheibe) und zwei zwischen diesen Scheiben angeordnete Schichten aus thermoplastischem Polyurethan (tPU) aufweist.

Erfindungsgemäss ist vorgesehen, dass zwischen den beiden Schichten aus thermoplastischem Polyurethan eine nicht-metallische IR-Schutzfolie angeordnet ist.

Bei der IR-Schutzfolie handelt es sich z.B. um eine mehrschichtige transparente Polyesterfolie mit besonderen Reflexionseigenschaften. Das Einbringen einer solchen Schutzfolie verringert die im Vergleich zu Silikatglas bereits geringe thermische Leitfähigkeit der Verbundglasscheibe zusätzlich. Insbesondere reduziert sie die Aufheizung des Fahrzeuginnenraums durch den langwelligen Anteil der Sonneneinstrahlung.

Überdies beeinträchtigt eine Nicht-metallische IR-Schutzfolie im Unterschied zu einer metallischen IR-Schutzfolie die Transmission von Funksignalen (mobile Telefonie, Satellitennavigation, Radioempfang etc.) nicht.

Nicht-metallische IR-Schutzfolien werden bereits in Szlikatglasscheiben verwendet. Dazu ist es erforderlich, die Oberfläche der Polyesterfolie durch eine Beschichtung zu modifizieren, damit sie mit der Silikatglasscheibe verbunden werden kann. Nicht-metallische IR-Schutzfolien werden daher in der Regel bereits ab Hersteller fertig konfektioniert mit einer solchen Beschichtung geliefert.

Der Anmelderin ist es erstmals gelungen, eine nicht-metaUische IR-Schutzfolie in einer Kunststoffscheibe zu verwenden. Da die Folie nicht unmittelbar auf eine Polycarbonat- oder Acrylat-Scheibe aufgebracht werden kann, kam die Anmelderin auf die Idee, die Folie in, eine tPU-Schicht einzubetten, wie sie in einer erzendungsgemäßen Kunststoff Verbirxndscheibe verwendet wird. Dabei ist die erwähnte Beschichtung der IR-Schutzfolie sehr hinderlich. Die Anmelderin kam daher erstmals auf die Idee, für diesen Zweck nicht beschichtete IR-Schutzfolien, die in dieser Form nur schwer erhältlich sind, zu verwenden.

Der Anmelderin ist es damit erstmals gelungen, eine Verbundscheibe aus Acrylat und Polycarbonat mit hoher Lebensdauer herzustellen. Die hergestellte Verbundscheibe vereinigt die Vorteile beider Werkstoffe, nämlich einerseits eine hohe Witterungs- und UV-Beständigkeit durch das außen liegende Acrylat, und andererseits eine hohe Schlagfestigkeit und hohe Temperaturbeständigkeit durch das innen liegende Polycarbonat.

Überdies hat dieser Aufbau den Vorteil, dass das außen liegende Acrylat mit UV-Schutzadditiven dotiert werden kann und so in der Verbundscheibe dazu verwendet werden, die darunter liegende Polycarbonat-Scheibe vor UV-Bestrahlung zu schützen.

Hinzu kommen die bereits in der Einleitung beschriebenen Vorteile von Kunststoffscheiben gegenüber Silikatglasscheiben für die Fahrzeugverscheibung. Überdies bietet die Schichtbauweise die Möglichkeit, zwischen den beiden Einzelscheiben weitere Schichten mit weiteren Funktionalitäten einzubringen.

Die Anmelderin hat das Problem, das sich durch die unterschiedlichen thermische Dehnungskoeffizienten der beiden Werkstoffe ergibt, dadurch gelöst, dass sie beide Werkstoffe mit einer Schicht aus thermoplastischem Polyurethan (tPU) verbindet. Bei tPU handelt es sich um einen elastischen Werkstoff mit einem hohen Rüclcstellvermvgen und einer hohen Transparenz, die den Werkstoff überhaupt erst für die Verwendung in Kunststoffscheiben geeignet macht. Die tPU-Schicht klebt dabei einerseits die beiden Scheiben zusammen, andererseits wirkt die Schicht aber auch als Puffer zwischen den beiden Scheiben, nimmt mechanische Verspannungen auf und verhindert so eine Delaminierung der beiden Scheiben.

Die tPU-Schicht kann als Folie oder als flüssiger oder pastöser Kleber auf eine der beiden Scheiben aufgebracht werden. Ebenso kann die tPU-Schicht zusammen mit Polycarbonat in Form eines Co-Extrudats hergestellt werden.

Dabei ist besonders bevorzugt vorgesehen, dass die zwischen der Polycarbonat-Scheibe und der Acrylat-Scheibe angeordnete Schichten tPU-Folien sind.

In einer weiteren bevorzugten Ausgestaltung der Erfindung ist vorgesehen, dass die Polycarbonat-Scheibe auf der Innenseite mit einem Kratzschutzlack versehen ist. Ebenso bevorzugt ist vorgesehen, dass die Acrylat-Scheibe auf der Außenseite mit einem Kratzschutzlack versehen ist. Hierbei kann es sich z.B. um übliche Silikatlacke handeln.

In einer bevorzugten Ausgestaltung der Erfindung ist vorgesehen, dass die Scheibe im Bereich der Schicht aus thermoplastischem Polyurethan eine Schicht elektrisch leitender Drähte aufweist. Die Drähte werden dabei in die tPU-Schicht eingebettet, ohne dass sich Luftblasen bilden.

Bei diesen Drähten kann es sich z.B. um Wolfram- oder Silberdrähte oder aus einer Legierung wie Cronifer hergestellte Drähte handeln.

In einer besonders bevorzugten Ausgestaltung der Erfindung ist vorgesehen, dass es sich bei der Schicht elektrisch leitender Drähte um eine Scheibenbeheizung und/oder eine Funkantenne handelt. Handelt es sich z.B. um eine Scheibenbeheizung, verlaufen die Drähte bevorzugt in senkrechter Richtung. Diese Ausrichtung hat für Scheibenbeheizungen eine Reihe von Vorteilen. Bei einer vereisten Scheibe bilden sich bei senkrechter Ausrichtung der Drähte senkrechte Schmelzkanäle, durch die das entstehende Schmelzwasser nach unten ablaufen kann. Bei waagerechter Ausrichtung der Drähte würden hingegen waagerechte Kanäle entstehen, die das Ablaufen des Schmelzwassers verhindern würden.

Der Durchmesser der verwendeten Drähte richtet sich u.a. nach dem spezifischen Widerstand des verwendeten Materials sowie der Größe der betreffenden Scheibe, andererseits aber auch nach optischen Erfordernissen. In jedem Fall liegt der Durchmesser der Drähte weit unterhalb der Dicke der tPU-Schicht.

Vorzugsweise verlaufen die Drähte nicht geradlinig, sondern wellenförmig, so dass die Wellen eine parallel zur Scheibenebene angeordnete Fläche ausbilden. Auf diese Weise wird einerseits eine bessere flächige Verteilung der Heizwärme in der Scheibe erreicht, andererseits wird dem Dehnungsverhalten der Drähte Rechnung getragen, die sich so unter der bei der Erwärmung auftretenden Elongation besser ausdehnen können als geradlinige Drähte, die gestaucht würden. Überdies verbessert der wellenförmige Verlauf die optischen Eigenschaften der Scheibe, da geradlinig und parallel zu einander in einer Scheibe verlaufende Drähte geringen Durchmessers bekanntermaßen zu Blendeffekten führen, wenn z.B. von jenseits der Scheibe eine punktförmige Lichtquelle (wie z.B. ein Autoscheinwerfer) in Richtung der Scheibe strahlt. Es wird vermutet, daß diese Blendeffekte auf Reflektionsphänomene an den Drähten zurückgehen.

Drähte können aber ebenso auch als Funkantenne verwendet werden, so z.B. für mobile Telefonie nach dem GSM-, GPRS- oder dem UMTS-Standard, für den Radioempfang, oder für die Ansteuerung von externen funkgesteuerten Schaltkreisen, wie z.B. Garagenantrieben.

Es ist denkbar, dass Drähte als Scheibenbeheizung und als Funkantenne in einer Fläche angeordnet werden.

Dabei ist bevorzugt vorgesehen, dass die Scheibe zusätzlich im Bereich einer der Schichten aus thermoplastischem Polyurethan eine Schicht elektrisch leitender Drähte aufweist, die wie bereits beschrieben als Scheibenbeheizung und/oder als Funkantenne fungieren kann.

In einer weiteren, besonders bevorzugten Ausgestaltung der Erfindung ist vorgesehen, dass die Acrylat-Scheibe mit UV-Schutzadditiven dotiert ist. Acrylat ist zwar unempfindlich gegenüber UV-Licht, läßt dieses jedoch ungehindert passieren. Eine Dotierung mit farblosen UV-Schutzadditiven wie z.B. Benzophenon oder Benzotriazol macht das Material UV-undurchlässig, und kann so z.B bewirken, dass darunter liegende UV-empfindliche Schichten geschützt werden. Aufgrund der im Vergleich zu einem LTV-Schutzlack weitaus höheren Schichtdicke ist dabei die UV-Schutzwirkung sehr viel besser.

In einer ebenfalls bevorzugten Ausgestaltung der Erfindung ist vorgesehen, dass die Acrylat-Scheibe mindestens das Acrylat Polymethylmethacrylimid (PMMI) enthält.

PMMI ist ebenso wie PMMA und andere Acrylate witterungsbeständig und mit UV-Schutzadditiven dotierbar. Es weist jedoch gegenüber PMMA eine höhere thermische Formbestädigkeit auf. Während PMMA nur bis zu Temperaturen von 95°C verarbeitet werden kann, weist PMMI eine Temperaturbeständigkeit bis 150°C auf und übertrifft damit sogar PC, das bis zu einer Temperatur von 130°C verarbeitet werden kann. Die Temperaturbeständigkeit ist deswegen wichtig, weil bei einigen Herstellungverfahren die beiden Einzelscheiben mit dem tPU in einem Autoklaven verbunden werden. Die Verarbeitungstemperatur beträgt dabei mindestens 120°C. PMMA kann aufgrund seiner schlechteren Wärmebeständigkeit bei diesen Verfahren nicht verarbeitet werden, wohl aber PMMI. Überdies weist PMMI eine noch härtere Oberfläche auf als PMMA.

In einer weiteren bevorzugten Ausgestaltung der Erfindung ist vorgesehen, dass die Scheibe auf der Innenseite und/oder auf der Außenseite eine lichtundurchlässige Scheibenrandbedruckung aufweist. Diese Bedruckung schützt einerseits Verklebungen im Randbereich der Verbundscheibe, die oftmals lichtempfindlich sind. Andereseits schützt die Bedruckung im Randbereich der Verbundscheibe angeordnete Bauteile, wie z.B. Sicherungselektronik, vor dem Einblick durch Dritte. Der zum Innenbereich der Scheibe gerichtete Rand der Bedruckung weist bevorzugt eine aufgelöste Struktur auf, z.B. ein Punkt-Muster. Hierdurch wird der Wärmegradient zwischen dem Bereich der Scheibenrandbedruckung, wo aufgrund der schwarzen Farbe eine starke Aufhezung stattfindet, und dem Innenbereich der Scheibe, geglättet, und so thermische Spannungen in der Scheibe vermindert.

Die vorliegende Erfindung betrifft überdies verschiedene Verfahren zur Herstellung einer Kunststoff-Verbundscheibe gemäss Oberbegriff des Anspruchs 1.

Ein geeignetes Herstellungsverfahren ist dadurch gekennzeichnet, dass Polycarbonat und thermoplastisches Polyurethan zu einem Colaminat coextrudiert und anschließend mit einer geformten Acrylat-Scheibe in einem Autoklaven miteinander verbunden werden.

Ein ebenso geeignetes Herstellungsverfahren ist dadurch gekennzeichnet, dass zunächst eine Acrylat-Folie mit einer thermoplastischen Polyurethan-Folie laminiert und anschließend mit Polycarbonat hinterspritzt wird.

Ein weiteres ebenso geeignetes Herstellungsvei-fahrcn ist dadurch gekennzeichnet, dass die Verbundscheibe in einem Zwei-Komponenten-Spritzverfahren hergestellt wird. Dabei wird eine Folie aus einem modifizierten thermoplastischen Polyurethan von der einen Seite mit einem Acrylat-Kunststoff und von der sanderen Seite mit einem Polycarbonat-Kunststoff hinterspritzt wird

Die genannten Herstellungsverfahren lassen sich ebenso für die Herstellung von erfindungsgemäßen Kunststoff-Verbundscheiben verwenden, die im Bereich der tPU-Schicht bzw. der tPU-Schichten eine Schicht elektrisch leitender Drähte IR-und/oder eine nicht-metallische IR-Schutzfolie aufweisen.

Weitere Einzelheiten und Vorteile des Gegenstands der Erfindung gehen aus der Zeichnung eines Ausführungsbeispiels sowie der dazugehörigen Beschreibung hervor.

Es zeigen in nicht maßstabsgetreuer Darstellung:
Fig. 1 eine gattungsgeznässe Kunststoff-Verbundscheibe mit einer Schicht elektrisch leitender Drähte, und
Fig. 2 eine erfindungsgemäße Kunststoff-Verbundscheibe mit einer Schicht elektrisch leitender Drähte sowie einer nicht-metallischen IR-Schutzfolie

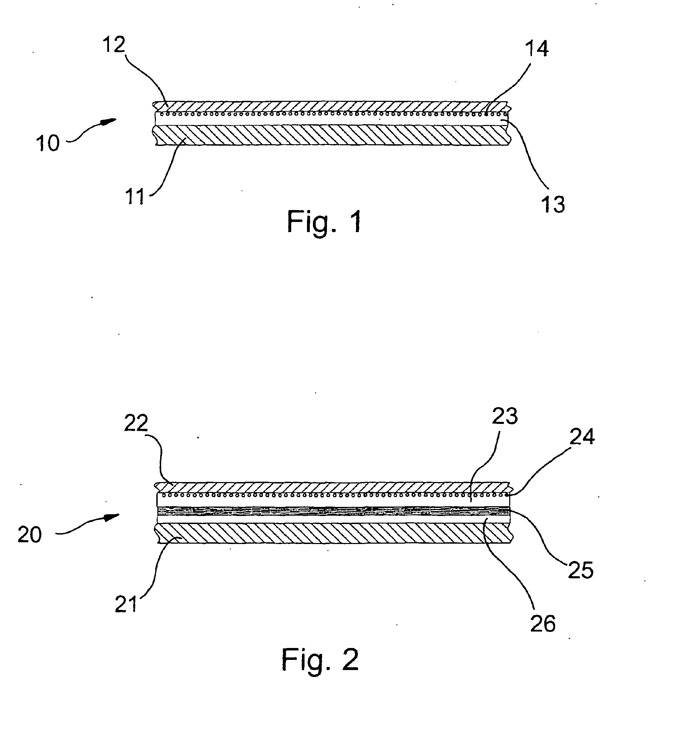

Fig. 1 zeigt eine Kunststoff-Verbundscheibe 10 mit einer Innenscheibe 11 aus einem Polycarbonat-Kunststoff und einer Außenscheibe 12 aus einem Acrylat-Kunststoff. Die Verbundscheibe vereinigt die Vorteile beider Werkstoffe, nämlich einerseits eine hohe Witterungs- und UV-Beständigkeit durch das außen liegende Acrylat, und andererseits eine hohe Schlagfestigkeit, hohe Temperaturbestän,d.igkeit und selbstverlöschende Eigenschaften durch das innen liegende Polycarbonat.

Überdies hat dieser Aufbau den Vorteil, dass das außen liegende Acrylat mit UV-Schutzadditiven dotiert werden kann und so in der Verbundscheibe dazu verwendet werden, die darunter liegende Polycarbonat-Scheibe vor UV-Bestrahlung zu schützen.

Zwischen den Einzelscheiben ist eine nicht maßstabsgetreu dargestellte Schicht 13 aus thermoplastischem Polyurethan (tPU) angeordnet, die als Puffer zwischen den beiden Scheiben wirkt, indem sie mechanische Verspannungen aufnimmt, die durch die unterschiedlichen thermische Dehnungskoeffizienten der beiden Werkstoffe entstehen, und so eine Delaminierung verhindert.

Im Bereich der Schicht 13 aus tPU ist überdies eine Schicht 14 elektrisch leitender Drähte angeordnet. Die Drähte sind in die tPU-Schicht eingebettet und fungieren im gezeigten Beispiel als Scheibenbeheizung.

Fig. 2 zeigt eine erfindungsgemäße Kunststoff-Verbundscheibe 20 mit einer Innenscheibe 21 aus einem Polycarbonat-Kunststoff und einer Außenscheibe 22 aus einem Acrylat-Kunststoff.

Zwischen den Einzelscheiben ist eine ist eine nicht maßstabsgetreu dargestellte Schicht 23 aus thermoplastischem Polyurethan (tPU) angeordnet, in die eine Schicht 24 elektrisch leitender Drähte eingebettet ist, sowie eine weitere Schicht 26 aus tPU. Zwischen den tPU-Schichten 23 und 26 ist eine nicht-metallische IR-Schutzfolie 25 angeordnet. Hierbei handelt es sich z.B. um eine mehrschichtige transparente Polyesterfolie mit besonderen Reflexionseigenschaften. Das Einbringen einer solchen Schutzfolie verringert die im Vergleich zu Silikatglas bereits geringe thermische Leitfähigkeit der Verbundglasscheibe zusätzlich. Insbesondere reduziert sie die Aufheizung des Fahrzeuginnenraums durch den langwelligen Anteil der Sonneneinstrahlung. Überdies beeinträchtigt diese Folie im Gegensatz zu metallischen IR-Schutzfolien den Empfang und/oder das Versenden von Funksignalen (mobile Telefonie, Satellitennavigation, Radioempfang etc.) nicht.

Das folgende nicht-ausschließliche Beispiel beschreibt ein Verfahren zur Herstellung einer erfindungsgemäßen Kunststoff-Verbundscheibe zur Verwendung in einem Kraftfahrzeug.
1. Eine im Extrusionsverfahren hergestellte Polycarbonat-Scheibe (Dicke: 3 mm) wird nach dem Aushärten durch Thermoformen in eine gewünschte Form gebracht und anschließend auf der Seite, die später zum Fahrzeuginnenraum weist, mit einem Siloxan-Abriebschutzlack (KASI abreibfester Lack, Hersteller: KRD Coatings, Geesthacht) beschichtet.
2. Auf die Seite der Polycarbonat-Scheibe, die später nach außen weist, wird eine Folie aus thermoplastischem Polyurethan (Dureflex A4700, Stärke: 381 µm bzw. 635 µm, Hersteller: Epurex Films) aufgebracht.
3. Auf diese Folie wird zunächst eine nicht-metallische IR-Schutzfolie aus Polyester (Dicke: ca 50 µm) und danach eine weitere Folie aus thermoplastischem Polyurethan aufgebracht.
   Die Schutzfolie besteht aus mehreren hundert alternierenden Lagen von 2 optisch transparenten Kunststoffen, die über eine hohe Doppelbrechung in ihren Brechungsindizes verfügen und zusammen eine Reflektionsbande ausbilden.
4. Mit Hilfe einer Plottingmaschine wird ein Wolfram-Draht (Durchmesser: 18 - 35 µm) erwärmt und in cosinus-ähnlichen Kurven auf die Folie aus thermoplastischem Polyurethan aufgetragen und eingedrückt.
5. Auf die Folie aus thermoplastischem Polyurethan wird eine Polymethylmethacrylimid-Scheibe (Dicke: 1 mm) aufgebracht, die im Extrusionsverfahren hergestellt, nach dem Aushärten durch Thermoformen in eine der Polycarbonat-Scheibe entsprechende Form gebracht und auf der zukünftigen Außenseite mit einem Siloxan-Abriebschutzlack beschichtet wurde. Auf der Innenseite dieser Scheibe kann auch vor der Verformung gegebenenfalls ein Schwarzrand mittels Siebdruck aufgebracht werden.
6. Die zusammengesetzte Scheibe wird in eine Vakuumhülle gegeben, an der ein Vakuum von ca. 0,2 bar angelegt wird. Diese wird anschließend in einem Autoklaven bei ca. 4 bar und 120°C für 4h zusammengepresst.

## Patentansprüche

1. Kunststoff-Verbundscheibefür die Fahrzeugverscheibung mit einer Innen-und einer Außenseite, mit einer Innenscheibe aus einem Polycarbonat-Kunststoff (Polycarbonat-Scheibe), einer Außenscheibe aus einem Acrylat-Kunststoff (Acrylat-Scheibe) und einer zwischen diesen Scheiben angeordneten Schicht aus thermoplastischem Polyurethan, **dadurch gekennzeichnet, dass** die Scheibe zwei zwischen der Polycarbonat-Scheibe und der Acrylat-Scheibe angeordnete Schichten aus thermoplastischem Polyurethan und eine zwischen diesen Schichten angeordnete nicht-metallische IR-Schutzfolie aufweist.

2. Kunststoff-Verbundscheibe gemäß einem der vorherigen Ansprüche, **dadurch gekennzeichnet, dass** die Polycarbonat-Scheibe auf der Innenseite und/oder die Acrylat-Scheibe auf der Außenseite mit einem Kratzschutzlack versehen ist.

3. Kunststoff-Verbundscheibe gemäß einem der vorherigen Ansprüche, **dadurch gekennzeichnet, dass** die Scheibe im Bereich der Schicht aus thermoplastischem Polyurethan, die an die Acrylat-Scheibe angrenzt, eine Schicht elektrisch leitender Drähte aufweist.

4. Kunststoff-Verbundscheibe gemäß Anspruch 3, **dadurch gekennzeichnet, dass** es sich bei der Schicht elektrisch leitender Drähte um eine Scheibenbeheizung und/oder eine Funkantenne handelt.

5. Kunststoff-Verbundscheibe gemäß einem der vorherigen Ansprüche, **dadurch gekennzeichnet, dass** die Acrylat-Scheibe mit UV-Schutzadditiven versehen ist.

6. Kunststoff-Verbundscheibe gemäß einem der vorherigen Ansprüche, **dadurch gekennzeichnet, dass** die Acrylat-Scheibe das Acrylat Polymethylmethacrylimid enthält.

7. Kunststoff-Verbundscheibe gemäß einem der vorherigen Ansprüche, **dadurch gekennzeichnet, dass** die Scheibe auf der Innenseite und/oder auf der Außenseite eine lichtundurchlässige Scheibenrandbedruckung aufweist.

8. Verfahren zur Herstellung einer Kunststoff-Verbundscheibefür die Fahrzeugverscheibung, mit einer Innen und einer Außenseite, mit einer Innenscheibe aus einem Polycarbonat-Kunststoff (Polycarbonat-Scheibe), einer Außenscheibe aus einem Acrylat-Kunststoff (Acrylat-Scheibe) und einer zwischen diesen Scheiben angeordneten Schicht aus thermoplastischem Polyurethan, insbesondere gemäß einem der Ansprüche 1-7, **dadurch gekennzeichnet, dass** die Schicht aus thermoplastischem Polyurethan zusammen mit dem Polycarbonat in Form eines Co-Extrudates hergestellt wird und das Co-Ezixudat dann im Autoklaven mit einer geformten Acrylat-Scheibe verbunden wird.

9. Verfahren zur Herstellung einer Kunststoff-Verbundscheibe für die Wahrzeugverscheibung, mit einer Innen- und einer Außenseite, mit einer Innenscheibe aus einem Polycarbonat-Kunststoff (Polycarbonat-Scheibe), einer Außenscheibe aus einem Acrylat-Kunststoff (Acrylat-Scheibe) und einer zwischen diesen Scheiben angeordneten Schicht aus thermoplastischem Polyurethan, insbesondere gemäß einem der Ansprüche 1-7, **dadurch gekennzeichnet, dass** eine Acrylat-Folie mit einer thermoplastischen Polyurethan-Folie laminiert und anschließend mit Polycarbonat hinterspritzt wird.

10. Verfahren zur Herstellung einer Kunststoff-Verbundscheibefür die Fahrzeugverscheibung mit einer Innen- und einer Außenseite, mit einer Innenscheibe aus einem Polycarbonat-Kunststoff (Polycarbonat-Scheibe), einer Außenscheibe aus einem Acrylat-Kunststoff (Acrylat-Scheibe) und einer zwischen diesen Scheiben angeordneten Schicht aus thermoplastischem Polyurethan, insbesondere gemäß einem der Ansprüche 1-7, **dadurch gekennzeichnet, dass** die Verbundscheibe in einem Zwei-Komponenten-Spritzverfahren hergestellt wird, bei dem eine Folie aus einem modifizierten thermoplastischen Polyurethan von der einen Seite mit einem Acrylat-Kunststoff und von der anderen Seite mit einem Polycarbonat-Kunststoff hinterspritzt wird.

## Claims

1. Laminated plastic pane for vehicle-glazing with an inner surface and an outer surface, comprising an inner pane made of polycarbonate plastic (polycarbonate-pane), an outer pane made of acrylate plastic (acrylate-pane), and a layer from thermoplastic polyurethane arranged between said panes, **characterized in, that** the pane comprises two layers from thermoplastic polyurethane arranged between the polycarbonate pane and the acrylate pane, and a non-metallic IR-protection foil arranged between the layers.

2. Laminated plastic pane according to one of the preceding claims, **characterized in, that** the the inner surface of the polycarbonate-pane and/or the outer surface of the acrylate-pane is provided with a scratch protection varnish.

3. Laminated plastic pane according to one of the preceding claims, **characterized in, that** the pane is provided with a layer of electrically conductive wires in a region of the layer from thermoplastic polyurethane adjacent to the acrylate-pane.

4. Laminated plastic pane according to claim 3, **characterized in, that** the layer of electrically conductive wires is a window-defogger and/or a radio-antenna.

5. Laminated plastic pane according to one of the preceding claims, **characterized in, that** the acrylate-pane is equipped with UV-protection additives.

6. Laminated plastic pane according to one of the preceding claims, **characterized in, that** the acrylate-pane comprises the acrylate polymethylmethacrylymide.

7. Laminated plastic pane according to one of the preceding claims, **characterized in, that** the inner surface and/or the outer surface of the pane is provided with an opaque edge coat printing.

8. Process for manufacturing a laminated plastic pane for vehicle-glazing with an inner and an outer surface, comprising an inner pane from polycarbonate-plastic (polycarbonate-pane), an outer pane from acrylate-plastic (acrylate-pane) and a layer from thermoplastic-polyurethane arranged between both panes, especially according to one of the claims 1-7, **characterized in, that** the layer from thermoplastic polyurethane is made together with the polycarbonate in form of a coextrudate and that the coextrudate is then bonded with a formed acrylate-pane in an autoclave.

9. Process for manufacturing a laminated plastic pane for vehicle-glazing with an inner and an outer surface, comprising an inner pane from polycarbonate-plastic (polycarbonate-pane), an outer pane from acrylate-plastic (acrylate-pane) and a layer from thermoplastic-polyurethane arranged between both panes, especially according to one of the claims 1-7, **characterized in, that** an acrylate-foil is laminated with a thermoplasticpolyurethane-foil and subsequently is covered with polycarbonate by back-injection molding.

10. Process for manufacturing a laminated plastic pane for vehicle-glazing with an inner and an outer surface, comprising an inner pane from polycarbonate-plastic (polycarbonate-pane), an outer pane from acrylate-plastic (acrylate-pane) and a layer from thermoplastic-polyurethane arranged between both panes, especially according to one of the claims 1-7, **characterized in, that** the laminated pane is manufactured by a two-component spray method, in which a foil from a modified thermoplastic-polyurethane is covered with an acrylate-plastic on one of it's sides and with a polycarbonate-plastic on it's other side by back-injection molding.

## Revendications

1. Vitre feuilletée en matière plastique destinée à la production de pare-brises pour véhicules dotée d'une face interne et d'une face externe, avec une vitre intérieure en polycarbonate (vitre polycarbonate) et une vitre extérieure en acrylate (vitre acrylate) et, placée entre ces vitres, une couche de polyuréthane thermoplastique, **caractérisée en ce que** la vitre présente deux couches de polyuréthane thermoplastique agencées entre la vitre polycarbonate et la vitre acrylate et, entre ces deux couches, une pellicule non métallique de protection contre les IR.

2. Vitre feuilletée en matière plastique selon l'une des revendications précédentes, **caractérisée en ce que** la face interne de la vitre polycarbonate et/ou la face externe de la vitre acrylate sont revêtues d'un vernis anti-rayure.

3. Vitre feuilletée en matière plastique selon l'une des revendications précédentes, **caractérisée en ce que** la vitre présente, dans la zone de la couche de polyuréthane thermoplastique adjacente à la vitre acrylate, une couche de fils conducteurs de l'électricité.

4. Vitre feuilletée en matière plastique selon la revendication 3, **caractérisée en ce que** la couche de fils conducteurs de l'électricité fait fonction de chauffage de la vitre et/ou d'antenne radio.

5. Vitre feuilletée en matière plastique selon l'une des revendications précédentes, **caractérisée en ce que** la vitre acrylate est dotée d'additifs de protection contre les UV.

6. Vitre feuilletée en matière plastique selon l'une des revendications précédentes, **caractérisée en ce que** la vitre acrylate contient l'acrylate polyméthylméthacrylimide.

7. Vitre feuilletée en matière plastique selon l'une des revendications précédentes, **caractérisée en ce que** la vitre présente sur sa face interne et/ou sur sa face externe une bordure imprimée opaque.

8. Procédé de fabrication d'une vitre feuilletée en matière plastique destinée à la production de pare-brises pour véhicules dotée d'une face interne et d'une face externe, avec une vitre intérieure en polycarbonate (vitre polycarbonate) et une vitre extérieure en acrylate (vitre acrylate) et, placée entre ces vitres, une couche de polyuréthane thermoplastique, notamment selon l'une des revendications 1 à 7, **caractérisé en ce que** la couche de polyuréthane thermoplastique est produite conjointement avec le polycarbonate sous forme d'un co-extrudat, ce co-extrudat étant alors accolé en autoclave à une vitre acrylate moulée.

9. Procédé de fabrication d'une vitre feuilletée en matière plastique destinée à la production de pare-brises pour véhicules dotée d'une face interne et d'une face externe, avec une vitre intérieure en polycarbonate (vitre polycarbonate) et une vitre extérieure en acrylate (vitre acrylate) et, placée entre ces vitres, une couche de polyuréthane thermoplastique, notamment selon l'une des revendications 1 à 7, **caractérisé en ce qu'**une feuille d'acrylate est laminée avec une feuille de polyuréthane thermoplastique puis revêtue de polycarbonate par surmoulage par injection.

10. Procédé de fabrication d'une vitre feuilletée en matière plastique destinée à la production de pare-brises pour véhicules dotée d'une face interne et d'une face externe, avec une vitre intérieure en polycarbonate (vitre polycarbonate) et une vitre extérieure en acrylate (vitre acrylate) et, placée entre ces vitres, une couche de polyuréthane thermoplastique, notamment selon l'une des revendications 1 à 7, **caractérisé en ce que** la vitre feuilletée est produite dans le cadre d'un procédé de moulage par injection de deux composants consistant à surmouler une face d'une feuille en polyuréthane thermoplastique modifié avec un acrylate et son autre face avec un polycarbonate.
